# FASCICULE DE BREVET EUROPEEN

(11) **EP 3 798 745 B1**
(45) Date de publication et mention de la délivrance du brevet: **13.07.2022**
(21) Numéro de dépôt: 19200486.9
(22) Date de dépôt: 30.09.2019
(51) Int. Cl.: G04G 17/04, G04G 19/00, G04G 19/02

(54) **FOND DE BOÎTE DE MONTRE COMPRENANT UN DISPOSITIF ÉLECTRONIQUE DE CHARGE SANS FIL D'UNE SOURCE D'ÉNERGIE**
UNTERTEIL EINES ARMBANDUHRENGEHÄUSES MIT DRAHTLOSER ELEKTRONISCHER AUFLADEVORRICHTUNG VON EINER ENERGIEQUELLE
WATCH CASE BACK WITH ELECTRONIC DEVICE FOR WIRELESS CHARGING OF A POWER SOURCE

(43) Date de publication de la demande: 31.03.2021
(73) Titulaire: ETA SA Manufacture Horlogère Suisse, 2540 Grenchen (CH)
(72) Inventeur: SCHENK, Marc, 2525 Le Landeron (CH); MOUCHE, Laurent, 2714 Les Genevez (CH)
(74) Mandataire: ICB SA

(56) Documents cités:
- WO-A1-2018/105773
- US-B2- 8 908 479
- US-B2- 10 250 064

## Description

### DOMAINE TECHNIQUE

L'invention concerne un fond démontable de boîte de montre ayant un dispositif électronique prévu avec des fonctions pour permettre la charge ou recharge sans fil d'une source d'énergie de la montre électronique ou électromécanique connectée.

L'invention concerne également une montre électronique ou électromécanique comprenant le fond démontable avec le dispositif électronique de charge sans fil d'une source d'énergie dans la montre.

L'invention concerne encore un procédé de montage du fond démontable avec le dispositif électronique de charge sans fil d'une source d'énergie.

### ARRIERE-PLAN TECHNOLOGIQUE

La durée de vie de pile ou batterie dans une montre connectée, telle qu'une montre intelligente, reste aujourd'hui un grand point faible d'un tel produit. Cela nécessite une fréquence de charge ou recharge de la batterie de montre, qui dépend des modes d'utilisation du porteur de la montre. Habituellement pour une opération de recharge de la batterie, un connecteur à câble externe relié à une source de tension peut être branché à un connecteur correspondant sur la boîte de montre. La recharge peut être obtenue par une cellule solaire de la montre ou en utilisant une induction électrique d'un appareil de charge.

La technologie de recharge par induction électrique apporte de nombreux avantages sur le produit, tel que la montre. D'une part, d'un point de vue esthétique, car aucune connexion physique et étanche n'est à intégrer dans l'habillage de la montre pour brancher le câble de chargement. D'autre part, le temps de charge par induction électrique est constant, par rapport à un chargement solaire, qui est très dépendant de la lumière ambiante.

Un chargement sans fil peut reposer sur le principe de l'induction électrique, selon lequel la circulation d'un courant électrique dans une bobine crée un courant dans une bobine située à proximité. Pour une montre, une des bobines (récepteur) est montée dans le fond de la montre, alors qu'une autre bobine (chargeur), à proximité et alimentée par un courant électrique, va produire un champ magnétique, ce qui crée un courant électrique induit dans la bobine (récepteur), pour alimenter la batterie.

Il est à noter que la proximité d'élément métallique comme certains composants d'habillage de la montre, peut diminuer le rendement lors de la recharge de la batterie. De plus, le champ électromagnétique entre les deux bobines va induire un courant dans les pièces métalliques voisines. Ce courant induit risque de provoquer un échauffement de ces pièces métalliques. Dans ce cas, il est envisagé de prévoir un blindage de la bobine de montre pour éviter les fuites de champ. Ce blindage peut être une ferrite.

Le document US 10,250,064 B2 décrit un dispositif électronique comprenant un boîtier dont une bobine conductrice est disposée à l'intérieur du boîtier, un élément mobile relié de manière opérationnelle à au moins une partie du boîtier et comprenant un ou plusieurs aimants qui génèrent un champ magnétique qui traverse la bobine conductrice, un premier circuit de charge électriquement connecté à la bobine conductrice pour recevoir sans fil l'énergie d'un dispositif externe utilisant la bobine conductrice et fournissant l'énergie reçue à une batterie de l'appareil électronique, et un deuxième circuit de charge électriquement connecté à la bobine conductrice pour fournir, à la batterie de l'appareil électronique, la puissance qui est induite dans la bobine conductrice basée sur le mouvement de l'élément mobile. Le dispositif peut comprendre un élément conducteur disposé dans le couvercle du boîtier, comme une bobine pour la recharge sans fil pour soutenir la recharge sans fil.

Le document WO 2018/105773 A1 décrit un terminal mobile comprenant une bobine de recharge sans fil située dans un espace intérieur, où la feuille de blindage a des espaces vides à des endroits où la bobine de chargement sans fil et les composants montés sur la carte principale se chevauchent. L'unité de batterie est disposée à l'avant de la carte principale. La bobine de recharge sans fil est située à l'arrière de la carte principale sur laquelle elle est collée, et le boîtier arrière couvre la bobine de recharge sans fil et la carte principale.

Dans l'art antérieur susmentionné, la bobine de recharge n'est pas agencée de manière convenable dans le boîtier de la montre en coopération de la batterie à recharger. De la place est perdue et la connexion entre les deux parties ne garantit pas une bonne recharge sans perte de courant.

### RESUME DE L'INVENTION

L'invention a donc pour but principal de pallier les inconvénients de l'état de la technique en proposant un fond démontable de boîte de montre ayant un dispositif électronique prévu avec des fonctions pour permettre la charge ou recharge sans fil d'une source d'énergie, telle qu'une batterie ou accumulateur.

A cet effet, la présente invention concerne un fond démontable de boîte de montre ayant un dispositif électronique prévu avec des fonctions pour permettre la charge ou recharge sans fil d'une source d'énergie, qui comprend les caractéristiques de la revendication indépendante 1.

Des formes particulières d'exécution du fond démontable sont définies dans les revendications dépendantes 2 à 11.

Un avantage du fond démontable réside dans le fait qu'il est possible de prévoir une intégration d'une source d'énergie, telle qu'une batterie ou un accumulateur rechargeable à grande capacité dans un volume réduit de montre. L'agencement de la source d'énergie dans la structure d'enceinte garantit une tenue aux chocs mécaniques. De plus, la structure d'enceinte de batterie est injectée, préassemblée et découplée du reste du mouvement. Le fond démontable réalisé est de faible épaisseur et avec un support de fond fabriqué en céramique ou en plastique.

Avantageusement, une bobine inductive est réalisée sur ou intégrée dans une plaque à circuit imprimé du premier sous-ensemble multifonctionnel. La plaque à circuit imprimé peut comprendre des composants, tels que des capteurs, ou des connecteurs. Un des connecteurs est disposé sur une languette flexible de la plaque à circuit imprimé pour être relié à une plaque à circuit imprimé principale du module horloger de la montre.

Avantageusement, le fond démontable fixé à une carrure de boîte de montre fermée est étanche à une pression d'au moins 10 bars. Le fond est de conception pour être facilement compatible avec un appareil de charge par induction.

A cet effet, la présente invention concerne aussi une montre électronique ou électromécanique adaptée pour une opération de charge ou recharge sans fil d'une source d'énergie interne, qui comprend les caractéristiques de la revendication indépendante 12.

Au moins une forme particulière d'exécution de la montre est définie dans la revendication dépendante 13.

A cet effet, la présente invention concerne aussi un ensemble comprenant une montre électronique ou électromécanique et un appareil de charge ou recharge de la source d'énergie de la montre

A cet effet, la présente invention concerne aussi un procédé de montage d'un fond démontable, qui comprend les caractéristiques de la revendication indépendante 15.

Au moins une étape particulière du procédé de montage est définie dans la revendication dépendante 16.

### BREVE DESCRIPTION DES FIGURES

Les buts, avantages et caractéristiques d'un fond démontable de boîte de montre ayant un dispositif électronique prévu avec des fonctions pour permettre la charge ou recharge sans fil d'une source d'énergie dans la montre, apparaîtront mieux dans la description suivante de manière non limitative en regard des dessins sur lesquels :
La figure 1 représente une vue de dessus et une vue tridimensionnelle en éclaté d'une forme d'exécution d'un premier sous-ensemble multifonctionnel d'un fond de boîte de montre à dispositif électronique de charge sans fil de la montre selon l'invention,
La figure 2 représente une vue de dessous et une vue tridimensionnelle en éclaté d'une forme d'exécution d'un second sous-ensemble multifonctionnel d'un fond de boîte de montre à dispositif électronique de charge sans fil de la montre selon l'invention,
La figure 3 représente une vue de dessus de l'assemblage final des deux sous-ensembles multifonctionnels selon l'invention, représentés respectivement aux figures 1 et 2, et
La figure 4 représente une vue tridimensionnelle en éclaté de la boîte de montre selon l'invention.

### DESCRIPTION DETAILLEE DE L'INVENTION

Dans la description suivante, tous les composants d'une montre, telle qu'une montre électronique ou électromécanique, qui sont bien connus de l'homme du métier dans ce domaine technique ne sont relatés que de manière simplifiée. La montre à dispositif électronique de charge sans fil d'une source d'énergie est du type montre intelligente, telle qu'une montre-bracelet, susceptible de comprendre des composants pour être connectée sans fil à un dispositif de communication ou à un appareil de charge. Une cellule solaire comme source d'énergie additionnelle peut aussi être prévue pour la montre électronique ou électromécanique.

Selon la présente invention, le fond démontable d'une boîte de montre électronique ou électromécanique, est prévu avec des fonctions pour permettre notamment la charge ou recharge sans fil d'une source d'énergie d'alimentation électrique des composants de la montre. Le fond démontable comprend au moins deux sous-ensembles multifonctionnels qui sont montés par exemple l'un au-dessus de l'autre.

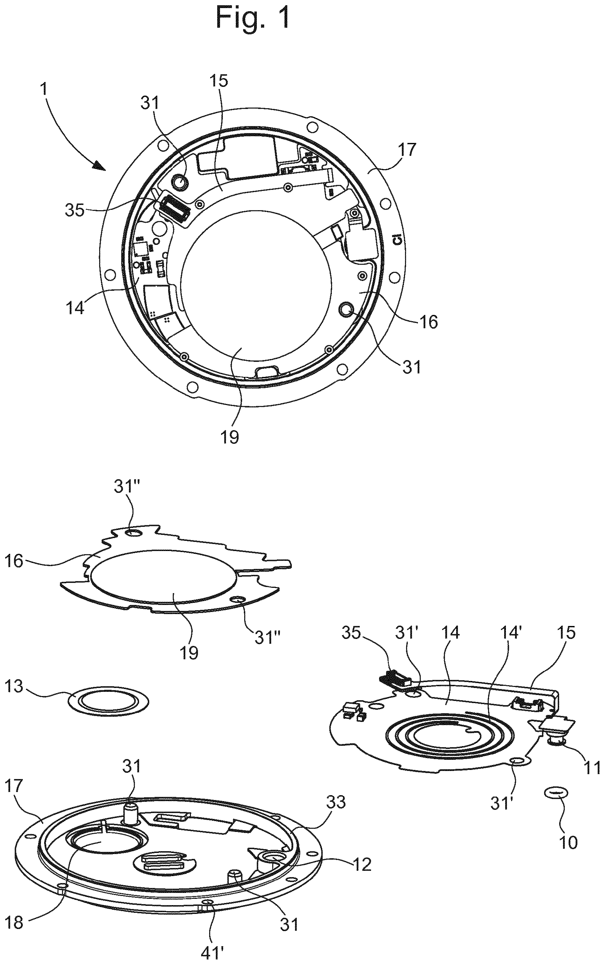

La figure 1 représente des vues de dessus et tridimensionnelle en éclaté d'un premier sous-ensemble multifonctionnel 1 du fond démontable. Ce premier sous-ensemble multifonctionnel 1 comprend essentiellement un vibreur 13, tel qu'un vibreur piézoélectrique, une bobine inductive 14' sur ou intégrée dans une plaque à circuit imprimé 14. Cette bobine inductive 14' sous forme de spirale peut être réalisée sur une surface inférieure ou une surface supérieure de la plaque à circuit imprimé 14. La bobine inductive 14' est couverte par un écran magnétique 16 d'un côté intérieur de la boîte de montre ou de la montre.

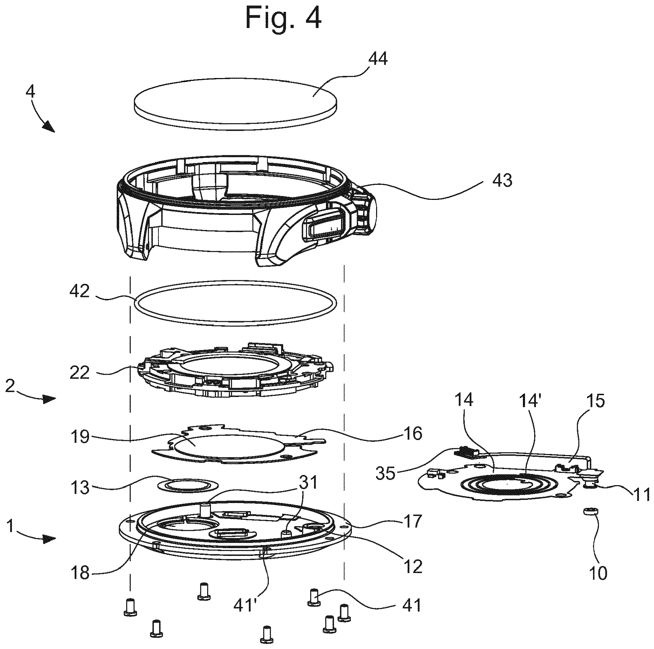

Le premier sous-ensemble multifonctionnel 1 peut comprendre comme base, un support de fond 17, qui peut être vissé au moyen de vis passant par des trous 41' en périphérie du support de fond 17, à une carrure de la boîte de montre comme expliqué ci-après en référence à la figure 4. Le support de fond 17 est d'épaisseur générale réduite, et peut être fabriqué par injection ou usinage dans différentes matières, comme des polymères chargés en fibres ou des matières céramiques, ou ferromagnétiques. Des couleurs peuvent être intégrées dans ces matières.

Un logement 18 dans le support de fond 17 est prévu pour recevoir le vibreur piézoélectrique 13. Le vibreur piézoélectrique 13 est positionné et collé ou maintenu dans le logement 18. Un connecteur peut aussi être prévu dans le logement pour connecter électriquement le vibreur piézoélectrique 13. Comme le vibreur piézoélectrique 13 est directement connecté et collé dans le logement 18 du support de fond 17, qui est destiné à venir en contact direct du poignet d'un porteur de la montre, cela permet d'améliorer le ressenti de la vibration générée du vibreur 13 par le porteur de la montre. Normalement, il peut encore être prévu des ressorts de contact du vibreur 13, quand le vibreur 13 est positionné et collé dans son logement 18. Les ressorts de contact, non représentés, passent à côté de l'écran magnétique 16 en ferrite.

Le support de fond 17 comprend encore deux tenons ou goujons 31, qui sont usinés depuis la base du support de fond 17 et orientés perpendiculairement vers le haut du côté intérieur de la boîte de montre. Ces tenons 31 sont de forme cylindrique et se terminent par un chanfrein. La plaque à circuit imprimé 14 par deux trous 31' et l'écran magnétique 16 par deux autres trous 31" sont placés l'un au-dessus de l'autre sur les tenons 31. La plaque à circuit imprimé 14 comprenant la bobine inductive 14' peut être collée sur une partie intérieure du support de fond 17, qui comprend le vibreur 13. L'écran magnétique en ferrite 16 peut être aussi collé sur la plaque à circuit imprimé 14.

Une fois que le second sous-ensemble multifonctionnel est monté sur le premier sous-ensemble multifonctionnel 1, les tenons 31 ont encore la fonction d'assurer les contacts des brides de la source de tension, du vibreur et d'un éventuel vibrateur. Il peut encore être prévu une bordure 33 entre le rebord de fixation par les vis et l'intérieur du support de fond 17, ce qui définit une cavité intérieure ou partie intérieure. Cette bordure 33 peut aussi servir au maintien du second sous-ensemble multifonctionnel une fois monté sur le premier sous-ensemble multifonctionnel 1.

Un capteur de pression 11 sous la forme d'un plot cylindrique comprend une gorge annulaire périphérique pour recevoir un joint annulaire 10 du type O-ring d'étanchéité pour être logé dans un réceptacle cylindrique 12 de forme complémentaire du support de fond 17. Au moins un trou, voire deux trous non représentés sont pratiqués au fond du réceptacle pour avoir accès à l'extérieur de la boîte de montre pour la mesure de la pression par le capteur de pression 11. Le capteur de pression 11 est monté sur la plaque à circuit imprimé 14. De plus, il est encore prévu de couvrir en partie l'écran magnétique 16 par une couche de mousse isolante 19, qui est collée sur l'écran magnétique 16. Cette mousse isolante 19 de forme circulaire comme représenté par exemple, permet de comprimer la source d'énergie, telle qu'une batterie et assurer sa résistance aux chocs une fois le fond monté à une carrure de la boîte de montre.

Il est encore à noter que la plaque à circuit imprimé 14 peut être au moins en partie flexible. Elle comprend une partie sous forme de languette 15 flexible pour venir au-dessus du second sous-ensemble multifonctionnel expliqué ci-après. Cette languette 15 se termine par un connecteur 35 à plusieurs broches à brancher à un connecteur complémentaire d'une plaque à circuit imprimé principale du module horloger. Par ce connecteur 35, l'alimentation électrique des composants du module horloger peut être réalisée. De plus, toute commande ou contrôle peut être fourni par une unité de contrôle, telle qu'un microcontrôleur, depuis le module horloger vers les composants électroniques des deux sous-ensembles multifonctionnels. La plaque à circuit imprimé 14 peut supporter ou relier électriquement plusieurs composants, tels qu'un capteur de pression, une boussole, des composants hardwares divers, un connecteur de vibreur, le connecteur 35 principal au calibre horloger, et un circuit redresseur lié à la bobine pour redresser la tension induite. Les composants électroniques sont reliés à des pistes conductrices de la plaque à circuit imprimé 14.

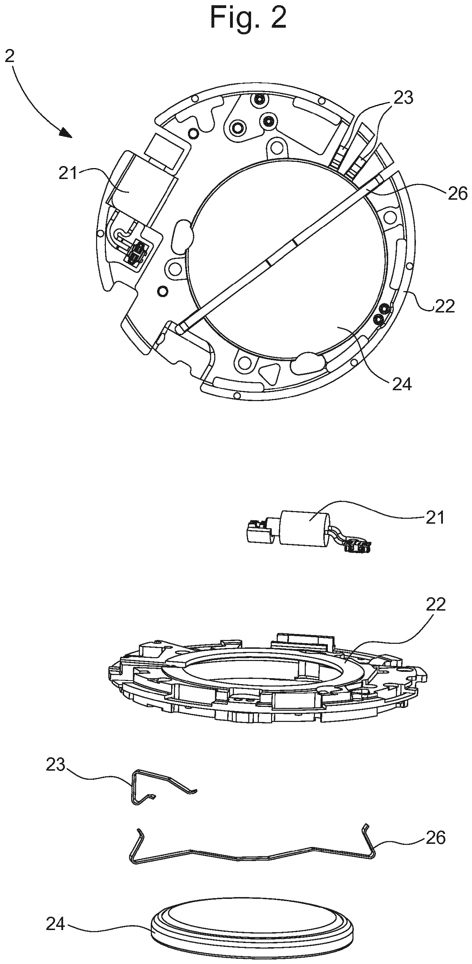

La figure 2 représente des vues de dessous et tridimensionnelle en éclaté d'un second sous-ensemble multifonctionnel 2 du fond démontable. Ce second sous-ensemble multifonctionnel 2 est destiné à être monté, connecté et positionné sur le premier sous-ensemble multifonctionnel.

Ce second sous-ensemble multifonctionnel 2 comprend une structure d'enceinte 22 pour recevoir une source d'énergie, telle qu'une batterie ou un accumulateur 24. De préférence dans la suite de la description, il sera décrit principalement une batterie 24 comme source d'énergie, mais sans limitation à d'autres formes de source d'énergie. Cette structure d'enceinte 22 est un composant injecté en plastique spécifique. Une ouverture traversante de la structure d'enceinte 22 est prévue de forme complémentaire à la batterie pour la recevoir.

Après montage, le second sous-ensemble multifonctionnel 2 comprend la batterie 24, au moins des contacts à brides 23, 26, et un vibrateur 21. Un connecteur à brides est prévu en sortie du vibrateur 21 de manière à être connecté à un connecteur à brides complémentaire de la plaque à circuit imprimé du premier sous-ensemble multifonctionnel. Une ou deux premières brides de contact 23 servent à connecter la borne négative de la batterie 24, alors qu'au moins une seconde bride de contact 26 est prévue pour connecter la borne positive de la batterie 24.

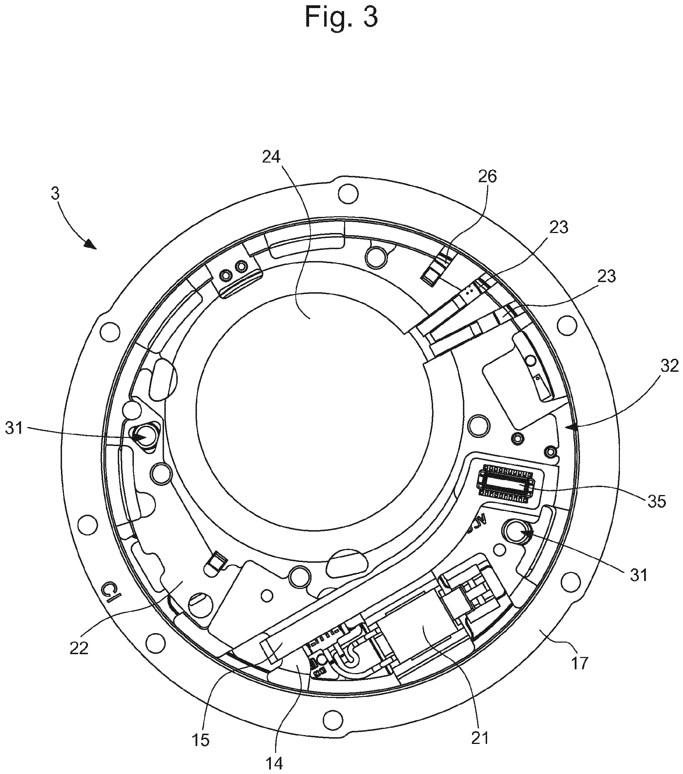

Lors de l'assemblage de la boîte de montre, la structure d'enceinte 22 de batterie 24 montée vient se centrer et s'aligner à l'aide de deux tenons du support de fond du premier sous-ensemble multifonctionnel comme expliqué ci-après en référence aux figures 3 et 4. Cela assure ainsi les contacts des brides 23, 26, du vibreur et du vibrateur 21, qui est connecté via un connecteur. La plaque à circuit imprimé avec la bobine inductive comprend une languette flexible passant au-dessus de la structure d'enceinte 22, et équipée du connecteur à plusieurs broches pour la connexion au module horloger. Le degré de liberté en hauteur Z de la structure d'enceinte 22 de batterie 24 montée, est verrouillé grâce à sa collerette en périphérie, qui est pincée entre la carrure et le fond démontable de la boîte de montre.

Il est à noter que les brides de contact 23, 26 viennent en contact de plages conductrices reliées à des pistes conductrices sur la plaque à circuit imprimé pour l'alimentation électrique des différents composants.

La figure 3 représente une vue de dessus de l'assemblage final des deux sous-ensembles multifonctionnels pour réaliser le fond démontable 3. On remarque sur cette figure 3, les mêmes éléments à signe de référence identique à ceux décrits ci-devant en référence aux figures 1 et 2. La description de ces éléments n'est donc pas répétée.

La figure 4 représente une vue tridimensionnelle en éclaté de la boîte 4 de montre électronique ou électromécanique selon l'invention. Le fond démontable comprend le premier sous-ensemble multifonctionnel 1 et le second sous-ensemble multifonctionnel 2, dont uniquement la structure d'enceinte 22 est montrée par simplification. Le fond démontable est monté à une portion inférieure d'une carrure 43 de la boîte 4 de montre par l'intermédiaire d'une garniture d'étanchéité 42, qui se présente sous la forme d'un joint annulaire de type O-ring. Pour ce faire, le fond démontable est fixé à la portion inférieure de la carrure 43 par des vis 41 passant par des ouvertures 41' d'un rebord périphérique du support de fond 17. La boîte 4 de montre est fermée sur une portion supérieure de la carrure 43 par au moins un verre 44 ou un verre entouré d'une lunette. Un module horloger non représenté est disposé dans la boîte 4 de montre au-dessus du fond démontable et généralement en dessous d'un écran d'affichage ou un cadran de montre sous le verre 44.

Le procédé de montage du fond démontable d'une boîte de montre électronique ou électromécanique est expliqué ci-après en référence à la figure 4. Le procédé de montage comprend des étapes de monter le premier sous-ensemble multifonctionnel 1. Les étapes sont les suivantes :
- insérer et maintenir par exemple par collage le vibreur 13 dans un logement 18 dans une partie intérieure d'un support de fond 17,
- maintenir par exemple par collage la plaque à circuit imprimé 14 comprenant la bobine inductive 14' sur la partie intérieure du support de fond 17, qui comprend le vibreur 13,
- maintenir par exemple par collage un écran magnétique 16 en ferrite sur la plaque à circuit imprimé 14,
- maintenir par exemple par collage une couche de mousse isolante 19 sur l'écran magnétique 16 en ferrite.

Le procédé de montage comprend encore les étapes de monter le second sous-ensemble multifonctionnel 2 selon les étapes suivantes :
- maintenir par exemple par collage un vibrateur 21 dans un logement dédicacé sur la structure d'enceinte de batterie 22,
- contacter des ressorts de contact au vibreur 13 et à un connecteur d'antenne dans des orifices dédicacés de l'enceinte de batterie 22,
- monter des contacts à brides 23, 26 sur la structure d'enceinte de batterie 22,
- positionner la batterie 24 dans l'enceinte de batterie 22.

Le procédé peut comprendre encore des étapes consistant à placer le second sous-ensemble 2 sur des tenons 31 de centrage et d'alignement du support de fond 17, à assurer la connexion au vibreur 13, et à plier une languette flexible 15 de la plaque à circuit imprimé 14 ayant un connecteur 35 pour assurer la connexion à un module horloger ou à une plaque principale à circuit imprimé pour le module horloger, et à mettre en contact les sous-ensembles multifonctionnels 1, 2 assemblés à une carrure de boîte de montre grâce à un rebord 32 de positionnement en hauteur.

Une fois que la boîte 4 de montre est montée avec tous les composants du module horloger et du fond démontable 1, 2, la montre électronique ou électromécanique peut être disposée sur un appareil de charge ou recharge sans fil de la source d'énergie 24 de la montre.

Il est encore à noter qu'avec un tel fond démontable selon l'invention à fonction de charge ou recharge d'une source d'énergie, telle qu'une batterie, plusieurs avantages sont constatés par rapport aux précédents dispositifs électroniques de charge d'une batterie. Comme précédemment, toute vibration ou génération de sons d'un vibreur dans la montre n'était pas ressentie de manière adéquate. Le fond démontable de la présente invention permet d'intégrer facilement un vibreur compact et standard du marché, directement sur le support de fond, si ce dernier est aussi en matière plastique par exemple. Grâce au placement d'un tel vibreur sur le support de fond, cela permet d'améliorer le ressenti du porteur de la montre.

L'intégration de la bobine inductive sur une plaque à circuit imprimé dans le fond démontable, permet d'exploiter une surface complémentaire à celle d'une plaque à circuit imprimé principale pour des composants Hardware et de gagner en encombrement au niveau de la hauteur. Ainsi certains composants Hardware peuvent être déportés dans des zones en dehors d'une hauteur critique.

L'accès à tous les composants dans la boîte de montre, qui sont récupérables à 95%, et notamment dans le fond démontable est très facile, ce qui permet de les remplacer facilement en cas de problème sur une ligne de montage. L'utilisation de colle ou adhésif est aussi réduite au minimum. La structure du fond démontable, qui est formé de deux sous-ensembles garantit une grande flexibilité pour des contrôles intermédiaires, des stocks intermédiaires et des changements esthétiques sur le fond de boîte de montre.

Dans le cas d'une batterie comme source d'énergie, il est possible de prévoir un fond démontable avec une batterie de forme propriétaire ou de forme cylindrique standard mieux adapté pour son montage et résistance aux chocs. Normalement, la batterie utilisée ou l'accumulateur rechargeable est de technologie Li-ion et peut être combiné par l'apport constant en énergie par exemple d'une cellule solaire. La fixation de la batterie dans la structure d'enceinte du second sous-ensemble est primordiale pour assurer sa bonne tenue aux grands chocs, ce qui est bien différent pour une batterie sur le mouvement de montre.

Finalement, la structure du fond démontable selon l'invention se distingue de l'état de l'art en ce qu'il est un ensemble d'épaisseur très réduite, fabriqué en matière plastiques ou céramique et étanche à 10 bars une fois assemblé en tête de montre. Il peut être pré-testé indépendamment de la montre à l'aide de son connecteur carte à carte et avec une facilité par des liaisons mécaniques sans adhésif, ni vis.

A partir de la description qui vient d'être faite, plusieurs variantes de fond démontable à dispositif électronique de charge ou recharge d'une batterie sans fil de la boîte de montre peuvent être conçues par l'homme du métier sans sortir du cadre de l'invention définie par les revendications. Les parties des sous-ensembles peuvent être montées et maintenues par d'autres moyens mécaniques que seulement le collage.

## Revendications

1. Fond (3) démontable d'une boîte de montre électronique ou électromécanique, le fond comprenant un dispositif intérieur électronique prévu avec des fonctions pour permettre la charge ou recharge sans fil d'une source d'énergie (24), et le fond comprenant deux sous-ensembles multifonctionnels et distincts (1, 2) du dispositif électronique, **caractérisé en ce qu'**il comprend :
- un premier sous-ensemble multifonctionnel (1) dans lequel sont montés un vibreur (13), une bobine inductive (14') sur ou intégrée dans une plaque à circuit imprimé (14), ladite bobine inductive (14') étant couverte par un écran magnétique (16) d'un côté intérieur de la boîte de montre,
- un second sous-ensemble multifonctionnel (2) sur le premier sous-ensemble multifonctionnel (1), comprenant une structure d'enceinte (22) pour recevoir la source d'énergie, telle qu'une batterie ou un accumulateur (24).

2. Fond (3) selon la revendication 1, **caractérisé en ce que** le vibreur est un vibreur piézoélectrique (13).

3. Fond (3) selon la revendication 1, **caractérisé en ce qu'**un support de fond (17) du vibreur (13), de la bobine inductive (14') et de l'écran magnétique (16) du premier sous-ensemble (1), est un composant fait d'un matériau injecté ou usiné, et ayant un connecteur de vibreur ou un logement (18) pour recevoir le vibreur (13).

4. Fond (3) selon la revendication 3, **caractérisé en ce que** le support de fond (17) est fait en céramique ou en polymère chargé en fibres.

5. Fond (3) selon la revendication 1, **caractérisé en ce que** la structure d'enceinte (22) pour recevoir la batterie ou l'accumulateur (24) est fait dans un matériau injecté.

6. Fond (3) selon la revendication 1, **caractérisé en ce que** des composants et connecteurs sont montés et reliés par des pistes conductrices sur la plaque à circuit imprimé (14) avec la bobine inductive (14'), et **en ce que** les composants et connecteurs comprennent un capteur de pression, une boussole et au moins un connecteur à brides.

7. Fond (3) selon la revendication 1, **caractérisé en ce que** l'écran magnétique (16) est une partie en ferrite pour permettre le passage de ressorts de contact du vibreur (13), quand ledit vibreur est positionné et collé dans le connecteur de vibreur ou logement (18).

8. Fond (3) selon la revendication 1, **caractérisé en ce que** l'écran magnétique (16) est couvert par une couche de mousse isolante (19) destinée à comprimer la batterie (24) et assurer sa résistance aux chocs.

9. Fond (3) selon la revendication 1, **caractérisé en ce que** le second sous-ensemble multifonctionnel (2) comprend, après montage, la batterie (24), au moins des contacts à brides (23, 26), et un vibrateur (21).

10. Fond (3) selon la revendication 9, **caractérisé en ce qu'**il comprend deux tenons (31) usinés sur un support de fond (17) du premier sous-ensemble multifonctionnel (1), pour positionner le second sous-ensemble multifonctionnel (2) sur le premier sous-ensemble multifonctionnel (1), et pour assurer le contact des brides (23, 26) et du vibrateur (21).

11. Fond (3) selon la revendication 9, **caractérisé en ce que** le second sous-ensemble multifonctionnel (2) comprend un rebord (32) pour bloquer sa position en hauteur dans la boîte de montre, lorsque le second sous-ensemble multifonctionnel (2) est pincé entre le support de fond (17) et une carrure (43) de montre.

12. Montre électronique ou électromécanique adaptée pour une opération de charge ou recharge sans fil d'une source d'énergie (24) interne, telle qu'une batterie ou un accumulateur, la montre ayant une boîte constituée d'une partie frontale avec un verre (44), d'une carrure (43) et d'un fond (3) démontable selon l'une des revendications 1 à 11, un module horloger mécanique ou électronique étant disposé dans le boîte de montre au-dessus du second sous-ensemble multifonctionnel (2) du fond (3) démontable.

13. Montre électronique ou électromécanique selon la revendication 12, **caractérisée en ce que** la montre est une montre électronique intelligente ou une montre-bracelet électromécanique, et **en ce qu'**elle comprend une cellule solaire comme source d'énergie additionnelle.

14. Ensemble comprenant une montre électronique ou électromécanique selon la revendication 12 ou 13 et un appareil de charge ou recharge de la source d'énergie (24) de la montre.

15. Procédé de montage d'un fond (3) démontable d'une boîte de montre électronique ou électromécanique prévue avec des fonctions pour permettre la charge ou recharge sans fil d'une source d'énergie (24) selon l'une des revendications 1 à 11, **caractérisé en ce qu'**il comprend les étapes de :
monter le premier sous-ensemble (1) selon les étapes suivantes :
- insérer et coller le vibreur (13) dans le logement (18) dans une partie intérieure d'un support de fond (17),
- coller la plaque à circuit imprimé (14) comprenant la bobine inductive (14') sur la partie intérieure du support de fond (17), qui comprend le vibreur (13),
- coller un écran magnétique en ferrite (16) sur la plaque à circuit imprimé (14),
- coller une couche de mousse isolante (19) sur l'écran magnétique en ferrite (16),
monter le second sous-ensemble (2) selon les étapes suivantes :
- coller un vibrateur (21) dans un logement dédicacé sur la structure d'enceinte de batterie (22),
- contacter des ressorts de contact au vibreur (13) et un connecteur d'antenne dans des orifices dédicacés de la structure d'enceinte de batterie (22),
- monter des contacts à brides (23, 26) sur la structure d'enceinte de batterie (22),
- positionner la batterie (24) dans l'enceinte de batterie (22).

16. Procédé selon la revendication 15, comprenant encore les étapes suivantes :
placer le second sous-ensemble (2) sur des tenons (31) de centrage et d'alignement, assurer la connexion au vibreur (13), et plier une languette flexible (15) de la plaque à circuit imprimé (14) ayant un connecteur (35) pour assurer la connexion à un module horloger ou à une plaque à circuit imprimé principale pour le module horloger,
mettre en contact les sous-ensembles (1, 2) assemblés à une carrure de boîte de montre grâce à un rebord (32) de positionnement en hauteur.

## Patentansprüche

1. Abnehmbarer Boden (3) eines Gehäuses einer elektronischen oder elektromechanischen Uhr, wobei der Boden eine innere elektronische Vorrichtung aufweist, die mit Funktionen versehen ist, um ein drahtloses Aufladen oder Wiederaufladen einer Energiequelle (24) zu ermöglichen, und wobei der Boden zwei getrennte multifunktionale Unterbaugruppen (1, 2) der elektronischen Vorrichtung umfasst, **dadurch gekennzeichnet, dass** er Folgendes umfasst:
- eine erste multifunktionale Unterbaugruppe (1), in der ein Schwingungserzeuger (13) und eine Induktionsspule (14'), die sich auf einer gedruckten Leiterplatte (14) befindet oder in diese integriert ist, montiert sind, wobei die Induktionsspule (14') durch eine magnetische Abschirmung (16) an einer Innenseite des Uhrengehäuses bedeckt ist,
- eine zweite multifunktionale Unterbaugruppe (2) auf der ersten multifunktionalen Unterbaugruppe (1), die eine Umfassungsstruktur (22) aufweist zu Aufnahme der Energiequelle, wie eine Batterie oder einen Akkumulator (24).

2. Boden (3) nach Anspruch 1, **dadurch gekennzeichnet, dass** der Schwingungserzeuger ein piezoelektrischer Schwingungserzeuger (13) ist.

3. Boden (3) nach Anspruch 1, **dadurch gekennzeichnet, dass** ein Bodenträger (17) des Schwingungserzeugers (13), der Induktionsspule (14') und der magnetischen Abschirmung (16) der ersten Unterbaugruppe (1) eine Komponente ist, die aus einem Spritzgussmaterial oder einem maschinell bearbeiteten Material hergestellt ist und einen Schwingungserzeugerverbinder oder eine Aufnahme (18) zur Aufnahme des Schwingungserzeugers (13) besitzt.

4. Boden (3) nach Anspruch 3, **dadurch gekennzeichnet, dass** der Bodenträger (17) aus einer Keramik oder einem faserverstärkten Polymer hergestellt ist.

5. Boden (3) nach Anspruch 1, **dadurch gekennzeichnet, dass** die Umfassungsstruktur (22) für die Aufnahme der Batterie oder des Akkumulators (24) aus einem Spritzgussmaterial hergestellt ist.

6. Boden (3) nach Anspruch 1, **dadurch gekennzeichnet, dass** die Komponenten und Verbinder auf der gedruckten Leiterplatte (14) montiert und durch Leiterbahnen mit der Induktionsspule (14) verbunden sind und dass die Komponenten und Verbinder einen Drucksensor, einen Kompass und wenigstens einen Stegverbinder umfassen.

7. Boden (3) nach Anspruch 1, **dadurch gekennzeichnet, dass** die magnetische Abschirmung (16) ein Ferritteil ist, um den Durchgang von Kontaktfedern des Schwingungserzeugers (13) zu ermöglichen, wenn der Schwingungserzeuger in dem Schwingungserzeugerverbinder oder der Aufnahme (18) positioniert ist oder darin verklebt ist.

8. Boden (3) nach Anspruch 1, **dadurch gekennzeichnet, dass** die magnetische Abschirmung (16) von einer isolierenden Schaumstoffschicht (19) bedeckt ist, die dazu bestimmt ist, die Batterie (24) einzuzwängen und ihre Stoßfestigkeit zu gewährleisten.

9. Boden (3) nach Anspruch 1, **dadurch gekennzeichnet, dass** die zweite multifunktionale Unterbaugruppe (2) nach der Montage die Batterie (24), mindestens Stegkontakte (23, 26) und einen Schwingungserzeuger (21) umfasst.

10. Boden (3) nach Anspruch 9, **dadurch gekennzeichnet, dass** er zwei maschinell bearbeitete Zapfen (31) auf einem Bodenträger (17) der ersten multifunktionalen Unterbaugruppe (1) aufweist, um die zweite multifunktionale Unterbaugruppe (2) auf der ersten multifunktionalen Unterbaugruppe (1) zu positionieren und um den Kontakt der Stege (23, 26) und des Schwingungserzeugers (21) zu gewährleisten.

11. Boden (3) nach Anspruch 9, **dadurch gekennzeichnet, dass** die zweite multifunktionale Unterbaugruppe (2) einen Rand (32) aufweist, um ihre Höhenposition in dem Uhrengehäuse zu fixieren, wenn die zweite multifunktionale Unterbaugruppe (2) zwischen dem Bodenträger (17) und einem Uhrengehäusemittelteil (43) eingeklemmt ist.

12. Elektronische oder elektromechanische Uhr, die für einen Betrieb des drahtlosen Aufladens oder Wiederaufladens einer internen Energiequelle (24) wie einer Batterie oder eines Akkumulators ausgelegt ist, wobei die Uhr ein Gehäuse besitzt, das aus einem vorderen Teil mit einem Glas (44), einem Gehäusemittelteil (43) und einem abnehmbaren Boden (3) nach einem der Ansprüche 1 bis 11 gebildet ist, wobei in dem Uhrengehäuse über der zweiten multifunktionalen Unterbaugruppe (2) des abnehmbaren Bodens (3) ein mechanisches oder elektronisches Uhrenmodul angeordnet ist.

13. Elektronische oder elektromechanische Uhr nach Anspruch 12, **dadurch gekennzeichnet, dass** die Uhr eine intelligente elektronische Uhr oder eine elektromechanische Armbanduhr ist und dass sie eine Solarzelle als zusätzliche Energiequelle enthält.

14. Anordnung, die eine elektronische oder elektromechanische Uhr nach Anspruch 12 oder 13 und eine Vorrichtung zum Laden oder Wiederaufladen der Energiequelle (24) der Uhr umfasst.

15. Verfahren zum Montieren eines abnehmbaren Bodens (3) eines Gehäuses einer elektronischen oder elektromechanischen Uhr nach einem der Ansprüche 1 bis 11, der Funktionen besitzt, um das drahtlose Laden oder Wiederaufladen einer Energiequelle (24) zu ermöglichen, **dadurch gekennzeichnet, dass** es die folgenden Schritte umfasst:
Montieren der ersten Unterbaugruppe (1) gemäß den folgenden Schritten:
- Einsetzen und Verkleben des Schwingungserzeugers (13) in die Aufnahme (18) in einem inneren Teil eines Bodenträgers (17),
- Kleben der gedruckten Leiterplatte (14), die die Induktionsspule (14') aufweist, auf den inneren Teil des Bodenträgers (17), der den Schwingungserzeuger (13) enthält,
- Kleben einer magnetischen Ferrit-Abschirmung (16) auf die gedruckte Leiterplatte (14),
- Kleben einer isolierenden Schaumstoffschicht (19) auf die magnetische Ferrit-Abschirmung (16),
Montieren der zweiten Unteranordnung (2) gemäß den folgenden Schritten:
- Herstellen eines Kontakts zwischen Kontaktfedern mit dem Schwingungserzeuger (13) und einem Antennenverbinder in dafür vorgesehenen Öffnungen der Batterieumfassungsstruktur (22),
- Montieren von Stegkontakten (23, 26) auf der Batterieumfassungsstruktur (22),
- Positionieren der Batterie (24) in der Batterieumfassungsstruktur (22).

16. Verfahren nach Anspruch 15, das außerdem die folgenden Schritte umfasst:
Anordnen der zweiten Unterbaugruppe (2) auf Zentrierungs- und Ausrichtungszapfen (31), Sicherstellen der Verbindung mit dem Schwingungserzeuger (13) und Biegen einer biegsamen Lasche (15) der gedruckten Leiterplatte (14), die den Verbinder (35) aufweist, um die Verbindung mit einem Uhrenmodul oder mit einer gedruckten Haupt-Leiterplatte für das Uhrenmodul sicherzustellen, und
Herstellen eines Kontakts zwischen den zusammengefügten Unterbaugruppen (1, 2) und einem Gehäusemittelteil des Uhrengehäuses kraft eines Höhenpositionierungsrandes (32).

## Claims

1. Removable case back (3) of an electronic or electromechanical watch case, the case back comprising an internal electronic device provided with functions to allow the wireless charging or recharging of a power source (24), and the case back comprising two multi-function sub-assemblies (1, 2) separate from the electronic device, **characterized in that** the case back comprises:
- a first multi-function sub-assembly (1) in which are mounted a buzzer (13), an inductive coil (14') on or integrated in a printed circuit board (14), said inductive coil (14') being covered by a magnetic shield (16) on an inner side of the watch case,
- a second multi-function sub-assembly (2) on the first multi-function sub-assembly (1), comprising an enclosure structure (22) for accommodating the power source, such as a battery or an accumulator (24).

2. Case back (3) according to claim 1, **characterized in that** the buzzer is a piezoelectric buzzer (13).

3. Case back (3) according to claim 1, **characterized in that** a base support (17) of the buzzer (13), of the inductive coil (14') and of the magnetic shield (16) of the first sub-assembly (1), is a component made of an injection moulded or machined material, and having a buzzer connector or a housing (18) for accommodating the buzzer (13).

4. Case back (3) according to claim 3, **characterized in that** the base support (17) is made of ceramic or of fibre-reinforced polymer.

5. Case back (3) according to claim 1, **characterized in that** the enclosure structure (22) for accommodating the battery or accumulator (24) is made of an injection moulded material.

6. Case back (3) according to claim 1, **characterized in that** components and connectors are mounted and connected by conductive paths on the printed circuit board (14) with the inductive coil (14'), and **in that** the components and connectors include a pressure sensor, a compass and at least one flange connector.

7. Case back (3) according to claim 1, **characterized in that** the magnetic shield (16) is a ferrite part to allow the passage of contact springs of the buzzer (13), when said buzzer is positioned and adhesive bonded in the buzzer connector or housing (18).

8. Case back (3) according to claim 1, **characterized in that** the magnetic shield (16) is covered by an insulating foam layer (19) intended to compress the battery (24) and ensure the resistance thereof to shocks.

9. Case back (3) according to claim 1, **characterized in that** the second multi-function sub-assembly (2) comprises, after assembly, the battery (24), at least contact strips (23, 26), and a vibrator (21).

10. Case back (3) according to claim 9, **characterized in that** the case back comprises two posts (31) machined on a base support (17) of the first multi-function sub-assembly (1), to position the second multi-function sub-assembly (2) on the first multi-function sub-assembly (1), and to ensure the contact of the strips (23, 26) and of the vibrator (21).

11. Case back (3) according to claim 9, **characterized in that** the second multi-function sub-assembly (2) comprises a rim (32) to block its position in height inside the watch case, when the second multi-function sub-assembly (2) is clamped between the base support (17) and a watch case middle (43).

12. Electronic or electromechanical watch suitable for an operation of wirelessly charging or recharging an internal power source (24), such as a battery or an accumulator, the watch having a case formed of a front part with a crystal (44), a middle part (43) and a removable case back (3) according to any of claims 1 to 11, a mechanical or electronic watch module being disposed inside the watch case above the second multi-function sub-assembly (2) of the removable case back (3).

13. Electronic or electromechanical watch according to claim 12, **characterized in that** the watch is an electronic smart watch or an electromechanical wristwatch, and **in that** the watch comprises a solar cell as an additional power source.

14. Assembly comprising an electronic or electromechanical watch according to claim 12 or 13 and a device for charging or recharging the power source (24) of the watch.

15. Method for assembling a removable case back (3) of an electronic or electromechanical watch case provided with functions to allow the wireless charging or recharging of a power source (24) according to any of claims 1 to 11, **characterized in that** the method includes the steps of:
assembling the first sub-assembly (1) in the following steps:
- inserting and adhesive bonding the buzzer (13) in the housing (18) in an inner portion of a base support (17),
- adhesive bonding the printed circuit board (14) comprising the inductive coil (14') on the inner portion of the base support (17), which comprises the buzzer (13),
- adhesive bonding a ferrite magnetic shield (16) on the printed circuit board (14),
- adhesive bonding an insulating foam layer (19) of the ferrite magnetic shield (16),
assembling the second sub-assembly (2) in the following steps:
- adhesive bonding a vibrator (21) in a dedicated housing on the battery enclosure structure (22),
- contacting contact springs to the buzzer (13) and an antenna connector in dedicated orifices in the battery enclosure (22),
- mounting contact strips (23, 26) on the battery enclosure structure (22),
- positioning the battery (24) in the battery enclosure (22).

16. Method according to claim 15, further comprising the following steps:
placing the second sub-assembly (2) on centring and alignment posts (31), ensuring the connection to the buzzer (13), and bending a flexible tab (15) of the printed circuit board (14) having a connector (35) to ensure connection to a watch module or to a main printed circuit board for the watch module,
placing in contact the multi-function sub-assemblies (1, 2) assembled to a watch case middle by means of a height positioning rim (32).
